(19) **Europäisches Patentamt** **European Patent Office** **Office européen des brevets**

(11) **EP 4 524 824 A1**

(12) **EUROPEAN PATENT APPLICATION**

(43) Date of publication:
19.03.2025 Bulletin 2025/12

(21) Application number: 23197867.7

(22) Date of filing: 18.09.2023

(51) International Patent Classification (IPC):
*G06N 5/045* (2023.01) *G06N 20/00* (2019.01)

(52) Cooperative Patent Classification (CPC):
**G06N 5/045; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Robert Bosch GmbH
70442 Stuttgart (DE)**
• **Carnegie Mellon University
Pittsburgh, PA 15213 (US)**

(72) Inventors:
• **Moshkovitz, Michal
Tel-Aviv (IL)**

• **Feng, Zhili
Pittsburgh, PA 15222 (US)**
• **Di Castro, Dotan
3440619 Haifa (IL)**
• **Kolter, Jeremy Zieg
Pittsburgh, PA 15217 (US)**

(74) Representative: **Bee, Joachim
Robert Bosch GmbH
C/IPA
P.O. Box 30 02 20
70442 Stuttgart (DE)**

Remarks:
Amended claims in accordance with Rule 137(2) EPC.

(54) **IMPROVED METHOD AND SYSTEM FOR GENERATING CONCEPT-BASED EXPLANATIONS FOR A TARGET MODEL**

(57) Some embodiments are directed to a computing a measure quantifying the influence of a concept defined by a concept model on classifications of a target model. This may include computing for sensor data in an evaluation set the output of a similarity function applied to the output of a target model and the output of a concept model.

EP 4 524 824 A1

**Fig. 2a**

## Description

Technical Field

The presently disclosed subject matter relates to a method for generating concept-based explanations for a target model, a system for generating concept-based explanations for a target model, and a computer storage medium.

Background

In the realm of machine learning (ML), there is an increasing emphasis on understanding the rationale behind the predictions made by ML systems, especially as they play an important role in various aspects of our lives. A significant challenge has been the opaque or black-box nature of many ML models, which obscures their decision-making processes from end-users. To address this opacity, the domain of explainable AI (XAI) has surfaced, dedicated to creating methodologies that elucidate the mechanisms and decisions of these models.

Post hoc explanations can offer valuable insights into how a model works without compromising the model's accuracy. These explanations provide additional information, such as feature-attributions that evaluate the contribution of each feature to the prediction. In addition to feature-attribution explanations, there are also example-based approaches like counterfactual explanations and influential examples. Counterfactual explanations highlight what changes to input would have to be made to change the model's output. Influential examples reveal which examples are the most important for a model's decision-making process. Overall, these post hoc explanations can help provide a better understanding of a model's inner workings.

One type of explanation that stands out is *concept explanation,* which assesses the importance of a humanly-understandable concept to a prediction. Concept explanations are a form of post hoc explanations that focus on determining the impact of concepts on a model's predictions. These concepts are usually human-understandable attributes that may be represented by vectors or scalars. Different studies have proposed methods to represent concepts in different ways and return the influence of concepts for neural network models. By way of illustration, when predicting the presence of a "zebra" in an image, the model might be influenced by recognizable concepts such as "stripes".

Several methods have been developed to capture the importance of a concept in relation to a prediction. Yet, several challenges persist. Existing method are often model-specific and require white-box access. This can be a limitation, for example, in cases where the model is proprietary and cannot be freely accessed for inspection. Furthermore, there remains an ambiguity regarding the interpretation, evaluation criteria, and distinctiveness of the various methods formulated for concept explanation.

Summary

It would be advantageous to have an improved way of quantifying the influence of a concept.

Most existing methods for concept explanations are designed for specific models. In addressing this limitation, embodiments are provided that implement model-agnostic measures. An approach is introduced for concept explanations that adheres to three natural axioms: separability, recursivity, and similarity. Through experimentation, it is shown that the method effectively discerns sufficient and necessary concepts and is adaptable to an extensive variety of model types. This approach is also markedly more efficient in execution compared to conventional methods. In addressing the associated challenges, an axiomatic method is established to gauge the significance of a concept in relation to a prediction. This is initiated by setting certain axioms and subsequently formulating a method aligned with these axioms. Beginning with these foundational principles ensures that the method remains robust and transparent.

Some embodiments are directed to computing a measure quantifying the influence of a concept defined by a concept model on classifications of a target model. This may include computing for sensor data in an evaluation set the output of a similarity function applied to the output of a target model and the output of a concept model.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. This aspect is used when the computer program is uploaded, and when the computer program is available for downloading.

Brief Description Of Drawings

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1 schematically shows an example of an embodiment of a system for computing a measure quantifying the influence of a concept,

Figures 2a and 2b schematically show an example of an embodiment of a system for computing a measure quantifying the influence of a concept,

Figure 3a schematically show examples of a measure quantifying the influence of a concept,

Figure 3b schematically show examples of a measure quantifying the influence of a concept,

Figure 4 schematically shows an example of an embodiment of a method for computing a measure quantifying the influence of a concept,

Figure 5a schematically shows a computer readable medium having a writable part comprising a computer program according to an embodiment,

Figure 5b schematically shows a representation of a processor system according to an embodiment.

Reference Signs List

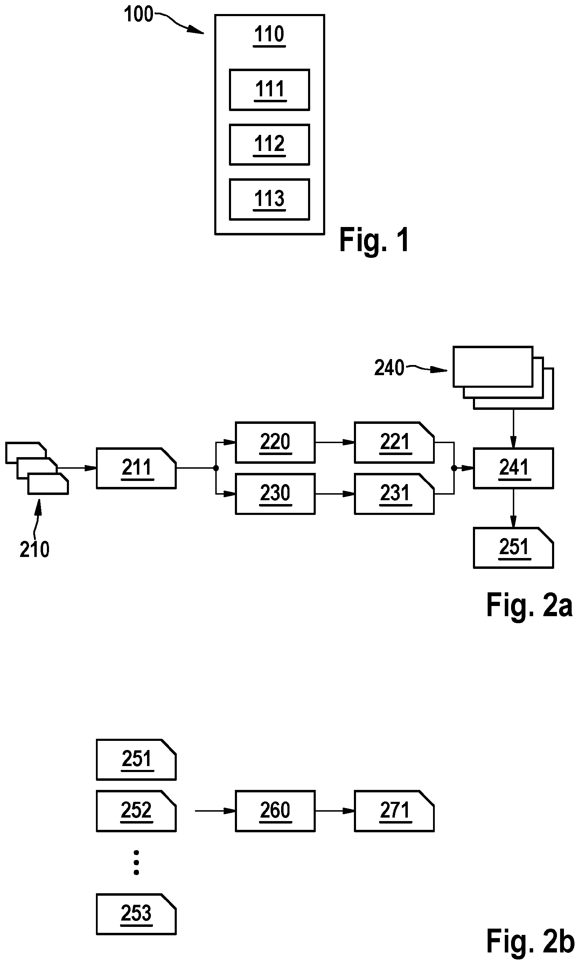

The following list of references and abbreviations corresponds to figures 1-2b, and is provided for facilitating the interpretation of the drawings and shall not be construed as limiting the claims.

| 110 | system for computing a measure quantifying the influence of a concept |
| 111 | a processor system |
| 112 | storage |
| 113 | communication interface |
| 210 | an evaluation set of multiple sensor data, |
| 211 | sensor data |
| 220 | a target model |
| 230 | a concept model |
| 221 | a target model output |
| 231 | a concept model output |
| 240 | a plurality of similarity functions |
| 241 | a similarity function |
| 251-253 | a similarity function output |
| 260 | a summing function |

| 271 | a summing output |
| 1000, 1001 | a computer readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

Description Of Embodiments

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

Various embodiments are proposed that offer a number of advantages.

Measures computed according to an embodiment are grounded in three axioms. The third axiom highlights the importance of the similarity between concepts and predictions in achieving a high value in the measure. By taking these axioms into consideration, measures are developed that are more accurate in evaluating the impact of concepts on predictions. Additionally, at least for some choices for similarity, unique measures are obtained that satisfy all axioms.

A measure according to an embodiment may be model-agnostic; no knowledge about the internal workings of the model is required. This sets embodiments apart from conventional methods which require access to the model's gradients or hidden layers. The lack of access to the inner workings of a model can prove to be

5     **EP 4 524 824 A1**     6

particularly beneficial when the model is confidential and cannot be revealed.

Concept explanations extend the notion of feature attribution, which primarily assigns importance to prediction features. Yet, within this subset of explanations, different attribution methods produce varied outcomes.

To validate the advantages of the method, experiments have been conducted to assess its performance in different scenarios. These showcase how the measures offer concept explanations for various model categories.

**Figure 1** schematically shows an example of an embodiment of a system 110 for computing a measure quantifying the influence of a concept. System 110 may comprise a processor system 111, a storage 112, and a communication interface 113.

System 110 may be provided with a target model and a concept model. The target model is the model for which the measure is needed. The concept model defines a concept. System 110 is configured to compute a value that indicates the influences of the concept on the classifications of the model. This can be useful for many purposes.

In the various embodiments of communication interface 113, the communication interface may be selected from various alternatives. For example, the interface may be a network interface to a local or wide area network, e.g., the Internet, a storage interface to an internal or external data storage, an application interface (API), etc.

Storage 112 may be, e.g., electronic storage, magnetic storage, etc. The storage may comprise local storage, e.g., a local hard drive or electronic memory. Storage 112 may comprise non-local storage, e.g., cloud storage. In the latter case, storage 112 may comprise a storage interface to the non-local storage. Storage may comprise multiple discrete sub-storages together making up storage 112

Storage 112 may be non-transitory storage. For example, storage 112 may store data in the presence of power such as a volatile memory device, e.g., a Random Access Memory (RAM). For example, storage 112 may store data in the presence of power as well as outside the presence of power such as a non-volatile memory device, e.g., Flash memory. Storage 112 may comprise a volatile writable part, say a RAM, a non-volatile writable part, e.g., Flash. Storage may comprise a non-volatile non-writable part, e.g., ROM, e.g., storing part of the software.

For example, storage may comprise parameters that define the target model, concept model, and an evaluation set of multiple sensor data that may be used to compute the measure.

The system 110 may communicate internally, with other systems, with other devices, external storage, input devices, output devices, and/or one or more sensors over a computer network. The computer network may be an internet, an intranet, a LAN, a WLAN, WAN, etc. The computer network may be the Internet. The system 110 comprise a connection interface which is arranged to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna. System 110 may be implemented on a single device, e.g., a server.

The communication interface 113 may be used to send or receive digital data, e.g., target and/or concept models, input, e.g., a similarity function selection, and an output, in particular said measure.

System 110 may have a user interface, which may include well-known elements such as one or more buttons, a keyboard, display, touch screen, etc. The user interface may be arranged for accommodating user interaction for initiating the computation of the measure.

The execution of system 110 may be implemented in a processor system. The system 110 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. system 110 may comprise multiple processors. A processor circuit may be implemented in a distributed fashion, e.g., as multiple sub-processor circuits. For example, system 110 may use cloud computing.

Typically, the system 110 comprises one or more microprocessors which executes appropriate software stored at the device; for example, that software may have been downloaded and/or stored in a corresponding memory, e.g., a volatile memory such as RAM or a non-volatile memory such as Flash.

Instead of using software to implement a function, system 110 may, in whole or in part, be implemented in programmable logic, e.g., as field-programmable gate array (FPGA). The device may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, system 110 may comprise circuits, e.g., for cryptographic processing, and/or arithmetic processing.

In hybrid embodiments, functional units are implemented partially in hardware, e.g., as coprocessors, e.g., AI coprocessors, e.g., for neural network evaluation, and partially in software stored and executed on the device.

**Figures 2a and 2b** schematically show an example of an embodiment of a system for computing a measure quantifying the influence of a concept. Figure 2a

4

illustrates a first part of the computation, and figure 2b a second part. The system of figures 2a and 2b may be implemented on system 110 shown in figure 1. The system of figures 2a and 2b may be implemented on a computer.

The system computes a measure quantifying the influence of a concept defined by a concept model on classifications of a target model. Such a measure serves as a concept-based explanation for the target model. Quantifying the influence of a concept enhances model explanation by offering a tangible metric that sheds light on how specific human-interpretable concepts affect model decisions. This not only promotes transparency by highlighting concepts important for predictions but also aids in identifying and potentially rectifying biases or errors rooted in these concepts.

The system is provided with two models: a target model, sometimes abbreviated as *h*, and a concept model, sometimes abbreviated as *c*. Both of the models are configured to receive as input at least sensor data ($x$) and to produce as output a classification; a target classification $h(x)$ and a concept classification $c(x)$, respectively. In an embodiment, multiple concept models are used to evaluate the target model for multiple concepts.

The output of the target and concept model can take various forms. For binary classification, the classifier typically outputs one of two classes, e.g., determining if an email is "spam" or "not spam". In multi-class or multi-label classification scenarios, the classifier can either determine one of several distinct classes-such as labeling a fruit image as "apple", "banana", or "cherry"-or it can assign multiple labels to a single instance, like tagging a movie as both "comedy" and "romance". In this case, the output of the model may be a vector indicating the relevance of each class. For example, the vector may sum to one, e.g., if the elements in the vector may be interpreted as probability scores. This is not necessary though, e.g., a vector may not sum to 1 if multiple classes or labels may apply to the same input sensor data.

Instead of a vector, the output of the target and/or concept model may be a scalar value, e.g., that that ranges from -1 to 1 or from 0 to 1, or it might be a discrete value, such as -1 or 1, or 0 or 1. The ability to work with discrete output values it especially useful when evaluating a proprietary target model which discretizes its output values, e.g., either spam or no-spam, without giving access to internal continuous scalar values that may be available.

If the output of the target model or of the concept model is a vector, the computation of the measure quantifying influence may be performed on the level of vectors, but may also be performed on the level of selected elements of the vectors. For example, the target model may classify a fruit, and may produce a vector with elements corresponding to particular fruits. The concept model may classify colors and may produce a vector with elements corresponding to particular colors. The computation may be done on the vector level, thus showing the influence of color on the fruit classification, or may be done on element level, e.g., showing the influence of yellow on the banana classification.

The target model may be opaque, or even a black box model. An opaque model refers to a machine learning model whose internal workings or decision-making processes are difficult to interpret or understand, often due to their complexity. For example, a neural network, especially a deep network, is considered an opaque model. In a black box model the internal processes are hidden from the user, making it impossible to understand the model's decision-making rationale directly. Interestingly, embodiments may be applied to both opaque and black box target models.

The concept model may also be opaque and/or black box. This is an advantage, as it allows the use of off-the-shelf, pre-trained concept classifiers. The target model and/or the concept model may be obtained in a trained state, but the target model and/or the concept model may also be trained by the system. For example, one more concepts models may be specifically trained to evaluate a target model various concepts.

For example, the target model and/or concept model may comprise any one of a neural network, a support vector machine, a linear regression, a logistic regression, random forests, etc. For example, both the target model and the concept model may comprise a neural network. For example, both the target model and the concept model may comprise a neural network image classifier.

The target model and concept model are configured to receive as input the same type of sensor data. Sensor data is obtained from a sensor, e.g., a microphone, camera, radar, and others.

Typically, the sensor data is at least 1-dimensional, comprising multiple values.

For example, the sensor data may be one-dimensional (1D), e.g., wherein the sensor data comprises one or more of an audio segment, time series data from instruments like temperature or pressure monitors, or waveform data from electromagnetic sensors.

For example, the sensor data may be two-dimensional (2D), e.g., wherein the sensor data comprises one or more of 2D spatial data from tools like geographic mapping instruments, an image captured by cameras operating in visible light or infrared spectrums, or heatmaps from thermal cameras.

For example, the sensor data may be three-dimensional (3D), e.g., wherein the sensor data comprises one or more of 3D spatial data from advanced scanners, volumetric images from medical tomography, or three-dimensional representations of physical objects.

For example, the sensor data may be higher-dimensional than three-dimensional, e.g., wherein the sensor data comprises one or more of spatiotemporal data, which captures spatial information over time, such as a volumetric movie segment showcasing a dynamic process.

Specifically, 3D MRI or CT scans that evolve over time represent 4D data. For instance, in cardiology, 4D MRI might be used to capture the volumetric (3D) changes of the heart over the cardiac cycle (time). Similarly, in oncology, the growth or regression of a tumor can be tracked over time using periodic 3D scans, resulting in 4D data. Another non-medical example is the tracking of a moving 3D object, e.g., a drone, over time.

In particular, the sensor data may comprise image data. For example, the sensor data may be an image obtained from a camera operating in either visible light or infrared spectrums, etc. The sensor data might be monocular, providing a singular viewpoint. Or it could be polyocular: a binocular image, for instance, presents two perspectives of the same subject, enhancing depth perception. More advanced setups might furnish multi-ocular images, capturing various viewpoints, more than just two. Additionally, there are distance-based sensor data forms like range images or point clouds taken from LIDAR devices, depth images from time-of-flight cameras, or even radar-based data that measures distances and velocities of targets. In some sophisticated applications, the sensor data might fuse multiple modalities, combining, for instance, a traditional color image with a depth image or juxtaposing an infrared image with a LIDAR-derived point cloud to provide more comprehensive insights.

The sensor data may comprise sensor measurements from different sources, e.g., an image as well as a temperature measurement.

Computing the measure quantifying influence of a concept uses an evaluation set 210, sometime denoted as $X$, of multiple sensor data. The evaluation set comprises the same type of sensor data as are received by the target and concept model. For example, the measure may be expressed as a sum over evaluation set.

In a typical embodiment, the evaluation set may be taken the same as a training set of multiple sensor data on which the target model was trained. However, it is possible to reduce the evaluation set, to reduce the computation costs of the measure. For example, the evaluation set may be a strict subset of the training set, e.g., having less than 50% of the sensor data than the training set. For example, in case of image classifiers the evaluation set may have less than 50% of the images in the training set.

One way to select the evaluation set from the training is random selection from the training set. This way an unbiased subset is obtained, especially for larger sizes of the evaluation set. Another approach is a controlled selection, aiming at obtaining a distribution of target classifications in the evaluation set that aligns with the distribution present in the training set. For example, stratified sampling may be used. In the stratified method, the training set is partitioned into strata based on certain criteria, notably the target classification by the target model. The evaluation set is then chosen to represent all these strata. For example, a random selection may be made for each stratum, e.g., proportional to the size of the stratum.

For instance, if the classification output is a scalar value, a stratum could be defined by a band of this scalar output, capturing all data points $x$, for which $a \leq h(x) < b$, for specific bounds $a$ and $b$. If the target model's output is a vector, strata can be established by setting bounds on two or more elements within this vector, ensuring a comprehensive sampling that considers multiple dimensions of the data.

As will be discussed in more detail a measure quantifying the influence of a concept, preferably satisfies certain conditions. For example, separability requires that each example is evaluated separately, meaning that the impact of one example is not enhanced or diminished by the specific values of different examples. Another preferred condition is recursivity, which is further discussed below. It turns out that even when satisfying these and other conditions, choice remains in how to compute the measure. This remaining freedom in defining the measure can be expressed in a similarity function, sometimes abbreviated as s.

The use of similarity functions is advantageous, as on the one hand it concentrates the remaining freedom to define a measure in one place: the definition of the similarity function. Furthermore, changing the similarity function allows obtaining a different view of the influence of a concept. In fact, in an embodiment, the measure is computed multiple times, for the same concept model, but with different similarity functions.

A similarity function receives as input an output of the target model for sensor data and an output of the concept model for said sensor data. For example, given a sensor data $x$, say an image, then the similarity function may be computed as $s(h(x), c(x))$. Note that this works for models that have scalar outputs as well as vector outputs. Note a vector output can always be simplified to a scalar output by selecting one particular element of the vector. For example, a similarity function for two vectors may be an inner product, e.g., the dot product, possibly scaled. For example, a similarity function for two vectors may be a cosine similarity.

Although not strictly necessary, it is convenient to use similarity functions that are continuous. It is also convenient to use similarity functions that are bounded, e.g., bounded from 0 up to 1, or from -1 up to +1, etc. Another convenient condition is monotonic. For example, the similarity function may be monotonic in any argument. For example, suppose both the target model and concept model have scalar outputs, then the similarity function $s(a,b)$ is monotonic in $a$ if for any fixed $b$ we have either $s(a_1,b) \leq s(a_2,b)$ or $s(a_1,b) \geq s(a_2,b)$ if $a_1 \leq a_2$. Similarly, the similarity function is preferably monotonic in $b$.

In an embodiment, a similarity function may have discontinuities, but is zero where the similarity function is discontinuous.

The system offers a choice from a plurality 240 of similarity functions for the similarity function. In the figure 2a, a selection function 241 is chosen from plurality 240. By making a different selection from the plurality, a different type of measure may be computed. The plurality may be predetermined in the system, e.g., some useful similarity functions are defined herein. The plurality may also or instead be user configurable.

To facilitate the selection of the similarity function, the system may provide various methods. For one, it can present a representation of the plurality of similarity functions on a display, enabling users to visually choose their preferred function. In this context, a user can make a selection directly from the display. Alternatively, the system might execute a script in which the desired similarity function is specified, automating the selection process based on predefined criteria or configurations. Such a solution may be preferred for automated testing of a target model against multiple concepts. Furthermore, a user can also make a selection for the similarity function via a computer interface. For example, the computer interface may be an API.

Various choices for a similarity function are possible. For example, suppose that the target model output comprises a value $x_t$ indicating the target classification, and the concept model output comprises a value $x_c$ indicating the concept classification. For example, these may be a scalar indicating a likelihood that the classification of the respective model applies. Possible choices for the similarity function as shown herein. The similarity function may comprise a multiplication $(x_t x_c)$ of the target model output value $(x_t)$ and the concept model output value $(x_c)$. For example, we may have $s(x_t, x_c) = x_t x_c$.

The similarity function may be zero if the target model value is below a threshold $a$, and the similarity function is monotonic with the concept model value. For example, we may have $s(x_t, x_c) = x_c \cdot \max(0, \text{sign}(x_t - a))$. The similarity function may be zero if the concept model value is below a threshold, and the similarity function is monotonic with the target model value. For example, we may have $s(x_t, x_c) = x_t \cdot \max(0, \text{sign}(x_c - a))$.

In these examples, $\text{sign}(x - a)$, for $x_t$ and/or $x_c$ may be replaced by $\text{sign}(a - x)$, in case a similarity function is needed in which model values above a threshold are considered.

The threshold $a$ may be chosen with respect to the distribution of the target model on the evaluation set. Preferably, a significant number of sensor data in the evaluation model have a target output over $a$. For example, assuming an output in the range 0-1, one may choose $a$ to be 0.8.

To calculate the measure, a computation is done for each sensor data in the evaluation set 210. In figure 2a, this computation is shown for sensor data 211. Both the target model 220 and the concept model 230 is applied to sensor data 211. In this way a target model output 221 and a concept model output 231 is obtained. Both outputs are then provided to similarity function 241. For example, if sensor data 211 is represented as $x$, then this may compute $s(h(x), c(x))$.

**Figure 2b** shows how the computation may continue. Using the process of figure 2a, similarity function outputs, that is a value, are obtained for each sensor data in the evaluation set 210. Figure 2b shows similarity function outputs 251-253. Typically, there will be more than three similarity function outputs, depending on the size of evaluation set 210. For example, as many as the size of evaluation set 210. The number of similarity function outputs may range from at least 100, at least 1000, to at least 100000, or even at least 1000000.

These similarity function outputs are summed in a summing function 260 to obtain a summing output 271. For example, summing function 260 may add the similarity function outputs, possibly followed by a division by the size of the evaluation set, e.g., summing function 260 may compute the average similarity function outputs. The measure may be derived from the summing function. For example, the measure may equal the sum, or the average. The sum may first be scaled or the like for the measure.

In an embodiment, a probability function is provided for the evaluation set. The probability function assigns a value from 0 up to 1 to each element in the evaluation set, such that the sum is 1. The probability function may represent a weight, e.g., an importance, to each element of the evaluation set. For example, the probability function may indicate how often the element of the evaluation set occurred, e.g., in practice, or in the training set. If $n$ is the size of the evaluation set, then the constant function $1/n$ may be used, possibly adjusted for selected elements, e.g., to correct for aberrant elements. Using a probability the summing is a weighted summing, weighted with the probability function. In this case, a weighted average may be obtained.

If a target model is to be evaluated for multiple concepts, represented by concept models $c_1, ..., c_k$, the target model outputs $h(x)$ may be computed once and cached. This reduces the computation of $s(h(x), c_j(x))$, with $1 \leq i \leq k$.

Once the measure is computed, it may be presented to a user, e.g., on a display. The measure may be used for various purposes, some of which are discussed below.

As pointed out, if desired, the target model and/or the concept model may be trained on the system. Alternatively, for either of them a pre-trained model may be obtained from an external source. The training may be done on training data comprising a training set of multiple sensor data and corresponding classifications.

In an embodiment, the measure may be used for selecting a training method for the target model. In practice, there are various ways to train a machine learning model. For example, one may choose between Stochastic Gradient Descent (SGD) or Adams. For example, one may make various choices for meta parameters that influence the training of a neural network, e.g., the learning rate, batch size, number of epochs, and so on. Different choices for training a method will result in different models, that behave differently, even if the difference is slight and hard to detect. Computing concept based influence values for differently trained models is one way to select a model.

For example, train a first target model and a second target model according to at least two different training methods on training data. Typically, the two target models are similar to the desired target model, but are smaller and/or are trained on less training data. For example, if the desired target model is a neural network, the first and second target models may be a smaller neural network. The first and second target models may have the same architecture, but this is not necessary. For example, the first and second target models may be trained with SGD versus Adams, or with a different learning rate, or the like. For example, the first and second target models may have a different architecture.

Once training is complete, a first measure may be computed for the first target model, and a second measure for the second target model, according to an embodiment. Typically, the same measure will be computed, e.g., using the same concept model, and similarity function. In an embodiment, multiple measures may be computed, e.g., using concept models and/or similarity functions. Among the first and second target model the one with the most desirable measures may be chosen. The training method used for the chosen target model, may then be applied to the larger target model. For example, as explained below, a model may seem to have good performance, but may appear to base its decision on non-relevant aspects in the image. Such a target model is likely to have poor generalizability. This can be detected from looking at the measures.

Apart from training, the concept-based influence measures may be applied in various situations.

For example, measures may be used to analyze a target model for defects, e.g., for debugging it. As explained further below, the measure can be predicted to be high or low depending on the situation. If a technical analyst for the target model finds that measures have values that differ from the expected value, then this may indicate a defect in the model. For example, the system may be provided with multiple concept models, and multiple measures for the target model may be computed corresponding to the multiple concept models. As indicated above, unusual values in the multiple measures may indicate a defect in the target model. For example, outliers may be determined in the multiple measures and reported to the analyst. For example, one or more concept models may be selected in dependence on the multiple measures, e.g., the concept model corresponding to the highest or smallest value, and reported to the user.

Many machine learning models, e.g., neural network, are notoriously hard to debug, having the ability to analyze the model for concepts gives important new tools to neural network engineers.

The desired multiple measures may be obtained from various sources. For example, the desired multiple measures may be obtained by defining which concepts should or should not be relevant for the target model, and the desired concept values may be defined analogously. The desired multiple measures may also be obtained by computing them for a successful model, e.g., a much larger or much better trained model, and the resulting measures may be used as desired measures for another model, e.g., using less or different training or a different architecture, etc.

Having a list of desired multiple measures and measured multiple measures, the analyst can do various things. For example, he/she may adjust the target model or the training data to enhance the alignment between the computed multiple measures and desired multiple measures. In particular, the measured multiple measures may be used to identify bias in the target model from the multiple measures. For example, if a concept model is trained to classify images into male or female, and the target model is trained to detect an illness in a medical image, e.g., lung cancer in an x-ray image, then the male/female classification may be preferred to have a low influence on the classification. This is relevant since, historically smokers were above average male, so that an above average part of training material may actually correspond to males. Yet it may be undesired that a higher probability of lung cancer is determined solely on the basis of gender.

For example, once such biases, or more generally undesired concept influences, have been found, they may be addressed by changing the model or the training. For example, in the lung cancer example above, examples of female lung cancer patients or male non-lung cancer patients may be added, or may be given increased weight, e.g., through a probability function.

As a further example, of using a measure to quantify the influence of a concept on a target model consider a target model comprising an image classifier for an autonomous vehicle. The image classifier may be configured to classify objects in a traffic scene. For example, the image classifier may identify objects including other vehicles like cars, trucks, motorcycles, and bicycles. It may also or instead recognize traffic signals, e.g., one or more of: signs, e.g., stop signs, traffic lights, yield signs, road markings like lane dividers, zebra crossings, and arrows indicating direction. Additionally, the image classifier may classify static objects like one or more of: lampposts, bridges, billboards, buildings, etc.

Another application of an image classifier is to classify traffic conditions as safe for autonomous driving. For example, the image classifier may detect one or more of: insufficient lighting, unsuitable road conditions, unexpected scenarios, etc.

In both cases, a control signal for controlling the autonomous vehicle may be derived from the target model, and used for controlling the autonomous vehicle, e.g., a car. The concept model may be trained for a concept relevant to safety. For example, the concept model may be trained to classify lighting, or to classify road conditions. On the other hand, the concept model may also be trained for a concept that is not related to safety, e.g., to classify billboard advertisement, vehicle brands, and the like. Such concepts should have a low impact on the predictions of the target model.

Concept-based influence measures can be utilized in various scenarios in training and beyond training. They may serve as tools for analyzing target models to identify potential defects or anomalies. If measures deviate from expected values, it suggests potential issues in the model. The system can be equipped with multiple concept models and the measures for the target model can be computed in relation to these concept models. Anomalies, such as outliers in these measurements, can flag defects. In certain cases, measures from a well-trained model can be used as benchmarks for other models. These measures assist analysts in tweaking target models, training parameters, or training data, e.g., to reduce bias or misalignments. For instance, gender biases in medical image classification can be detrimental and should have minimal influence on the model's outcomes. In the context of autonomous vehicles, safety related concept should have high influence, while unimportant concepts a low. Choosing the concepts may be left to the skilled person and/or may be determined empirically.

Embodiments comprise selecting a similarity function from a plurality of similarity functions. Another useful method is to predetermine the similarity function. For example, the similarity function may be predetermined according to a similarity function described herein, or in the claims.

An example of such a method may comprise computing a measure quantifying the influence of a concept defined by a concept model on classifications of a target model, the method comprising providing the target model, the target model being configured to receive as input at least sensor data and to produce as output a target classification; providing the concept model, the concept model being configured to receive as input at least sensor data and to produce as output a concept classification; providing an evaluation set of multiple sensor data; calculating the measure, the calculating comprising for each sensor data in the evaluation set computing an output of the target model for the sensor data, an output of the concept model for said sensor data, and an output of the a selected similarity function applied to the output of the target model and the output of the concept model, the similarity function being configured to receive as input an output of the target model for sensor data and an output of the concept model for said sensor data; summing the outputs of the similarity function, and deriving the measure from the summing.

Below several further optional refinements, details, and embodiments are illustrated. Furthermore, a mathematical notation is introduced useful for describing some embodiments.

Notation. We use $X$ to represent the set of input examples. The target model to be explained is denoted by $h: X \rightarrow \{-1, +1\}$, which takes inputs from $X$ and outputs either +1 or -1 to indicate whether the prediction is true or false, respectively. The concept we are interested in measuring is denoted by $c: X \rightarrow [-1, +1]$ (or c: $X \rightarrow \{-1, +1\}$ in the discrete case), which maps inputs from $X$ to values between -1 and +1, where $c(x) = 1$ indicates that the concept holds and $c(x) = -1$ indicates that it does not. The probability distribution over examples is denoted by $p: X \rightarrow [0,1]$, which maps inputs from $X$ to a probability, $\Sigma_x p(x) = 1$. For a target and/or concept model that produces a vector, the formulas may be applied to one element of the output vector. Alternatively, the same approach may be applied, but using a similarity function configured to receive vectors instead of scalars. Other ranges than [-1, +1] may be used; furthermore the specific examples given herein may be mapped on to another range if desired.

A goal is to identify a measure, denoted as $M$, which quantifies the influence of a concept c on the predictions of an opaque model $h$; for example, consider $h$ as a predictor of the "zebra" class and c is the concept of "stripes". This allows one, e.g., to gain a deeper understanding of the model $h$ by making use of a concept that is comprehensible to humans. In an embodiment, the measure $M$ is a function of the following parameters: [(i)] the model $h$, the concept $c$, and optionally a priori probability $p(\cdot)$ over the examples.

Axiom 1: separability

When measuring the impact of a concept, the separability axiom requires that each example is evaluated separately, meaning that the impact of one example is not enhanced or diminished by the specific values of different examples. In other words, the impact of an example is considered in isolation and not affected by other examples. It may be desired from $M$ that it is analytic, e.g., infinitely differentiable everywhere, immediately implying that $M$ is additive: If $M$ satisfies the separability axiom and is analytic, then M is additive, i.e., can be written as

$$M(h, c, p) = \sum_{x \in \mathcal{X}} m(h(x), c(x), p(x)),$$

for some local impact function m: $\{-1, +1\} \times [-1,1] \times [0,1]$.

Axiom 2: recursivity

The second axiom delves into the local measure m and investigates how it relates the probability example, $p(x)$, to the properties of example $h(x)$ and $c(x)$. The axiom specifically aims to investigate how $m$ changes with respect to $p(x)$.

The recursivity axiom requires that when splitting the probability $p(x)$ of an example between two new examples with the same $h(x)$ and $c(x)$ values, the value of $M$ remains unchanged. In other words, the axiom requires that replacing an example $x$ with two examples that have probabilities $p_1$ and $p_2$ such that $p_1 + p_2 = p(x)$ and the same $h(x)$ and $c(x)$ values, keeping all other examples unchanged, does not alter the value of $M$.

From the last two axioms, we deduce that $M$ is additive and a linear function of p: If $M$ satisfies the separability and recursivity axioms, $M$ is analytic, and $p$ is over the rationals then $M$ can be written as

$$M(h, c, p) = \sum_x p(x) \cdot s(h(x), c(x)),$$

for some function $s$: {-1, +1} $\times$ [-1, +1].

This axiom guarantees linearity in probability. If not probability function is explicitly used, then $p(x)$ may be replaced by the constant $1/n$ wherein $n$ is the size of $x$.

Axiom 3: similarity

In the third axiom, the term $s(h(x), c(x))$ is addressed, which focuses on a single example with a certain probability; the exact probability is irrelevant for $s$. It aims to determine the contribution of $h(x)$ and $c(x)$ to the overall value of $M$.

The similarity axiom asserts that for every example $x$, when $c(x)$ and $h(x)$ are of close value $M$ will be high, and when they are of far values, $M$ will be low. To satisfy this axiom, any similarity function can be utilized. One natural choice when M is viewed only as a function of $c(x)$ and $h(x)$ is to take $s(h(x), c(x)) = c(x) \cdot h(x)$. Making the resulting measure as follows.

Symmetric measure: For predictor $h: X \rightarrow$ {-1, +1}, concept c: $X \rightarrow$ [-1, +1], and probability $p$ over the examples, the symmetrical measure for concept influence is defined as $M(h, c, p) = \mathbb{E}_{x \sim p}[h(x)c(x)]$.

It can be shown mathematically, that if all axioms are fulfilled, then $M$ must be the symmetric measure. The symmetric measure is the unique measure that satisfies the separability, recursivity, and similarity with $s(h(x), c(x)) = c(x) \cdot h(x)$ axioms and is analytic.

There are various other similarity functions that can be considered. For instance, one may want to focus on a particular class, such as class +1. In this case, examples with a different class will have no impact on the measure, and for the relevant examples, we define $s(h(x), c(x)) = c(x)1_{h(x)=1}$. After normalization to obtain an expected value, the resulting measure M is as follows.

Class-conditioned measure: For predictor $h:X \rightarrow$ {-1, +1}, concept c: $X \rightarrow$ [-1, +1], and probability $p$ over the examples, the class-conditioned measure for concept influence is defined as

$$M(h, c, p) = \mathbb{E}_{x \sim p}[c(x)|h(x) = 1]$$

This measure quantifies how frequently the concept c occurs in the class, e.g., if $c$ is always present when $h(x) = 1$, then the value of $M$ will be high. Putting differently, class-conditioned measure evaluates the level of necessity of $c$ to the predictions of $h$.

Another possible similarity function s to consider is one that focuses on a specific concept and disregards all examples that do not meet the threshold $\theta$ for $c$. In particular, we define $s(h(x), c(x)) = h(x)1_{c(x) \geq \theta}$. The resulting measure $M$ is as follows.

Concept-conditioned measure: For predictor $h: X \rightarrow$ {-1, +1}, concept $c: X \rightarrow$ [-1, +1], threshold $\theta e$ [-1, +1], and probability $p$ over the examples, the concept-conditioned measure for concept influence is defined as

$$M_\theta(h, c, p) = \mathbb{E}_{x \sim p}[h(x)|c(x) \geq \theta]$$

This measure quantifies the probability of the class when the concept holds (i.e., exceeding the threshold). E.g., if whenever c is present enough (i.e., $c(x) \geq \theta$), the class is 1, then $M$ will be high. In other words, concept-conditioned measure evaluates whether $c$ is sufficient for the predictions of $h$.

Various other similarity functions are possible. In some embodiments, it is preferred to use a similarity function that is bounded, e.g., has the same range as the output of the models, e.g., in this case [-1, +1], and/or a monotonic when all but one input is kept fixed. Other examples of similarity functions $s(x,y)$ include 1 - $|x$ - $y|$, or 1 - $\frac{1}{2}(x - y)^2$. The similarity function is preferably continuous, but this is not necessary; a similarity function may for example be discontinuous when conditioning on a particular concept being present, or being present above a threshold.

It is noted that some conventional concept measure, such as TCAV, see "Interpretability beyond feature attribution: Quantitative testing with concept activation vectors (TCAV)", by B. Kim, et al. (included herein by reference), require the training of models for each target and concept model combination that is considered. Embodiments are considerably faster than this approach. Yet embodiments are at least as accurate as TCAV.

Experiments

Experiments were done to demonstrate the validity and applicability of embodiments; some of these are described below. We show that our measures capture the relationship between the predictor and the concept. The proposed method is then applied to a wide range of models, irrespective of their internal workings.

As a proof of concept, this section validates the measure's meaning through two scenarios. In the first scenario, consider a classifier $h$ that tries to predict fine-grained classes of Felidae, e.g., whether the given image *x* is a Persian cat (label as 1) or not (label as 0). Note that the range used for classifications in this section is [0, 1] instead of [-1,1]. Then conditioned on *h*(*x*) = 1, one should expect that the concept "the animal in the image belongs to the Felidae family" has a very high score. That is,

$$\mathbb{E}[c(x)|h(x) = 1] \approx 1$$

. Put differently, for any necessary concept, one expects a large value of

$$\mathbb{E}[c(x)|h(x) = 1]$$

for any reasonable classifier. On the other hand, if one wants to understand the impact of the concept "the animal in the image is a wolf', the aforementioned score should be low, as the concept is largely irrelevant to the prediction of a Persian cat.

In the second scenario, imagine *h* is only predicting whether *x* is a Felidae (label 1) or not (label 0), then condition on the concept of "the animal in the image is a Persian cat", one expects $\mathbb{E}[h(x)|c(x) = 1] \approx 1$.

That is, for any sufficient concept, one expects a large

value of $\mathbb{E}[h(x)|c(x) = 1]$ for any reasonable classifier.

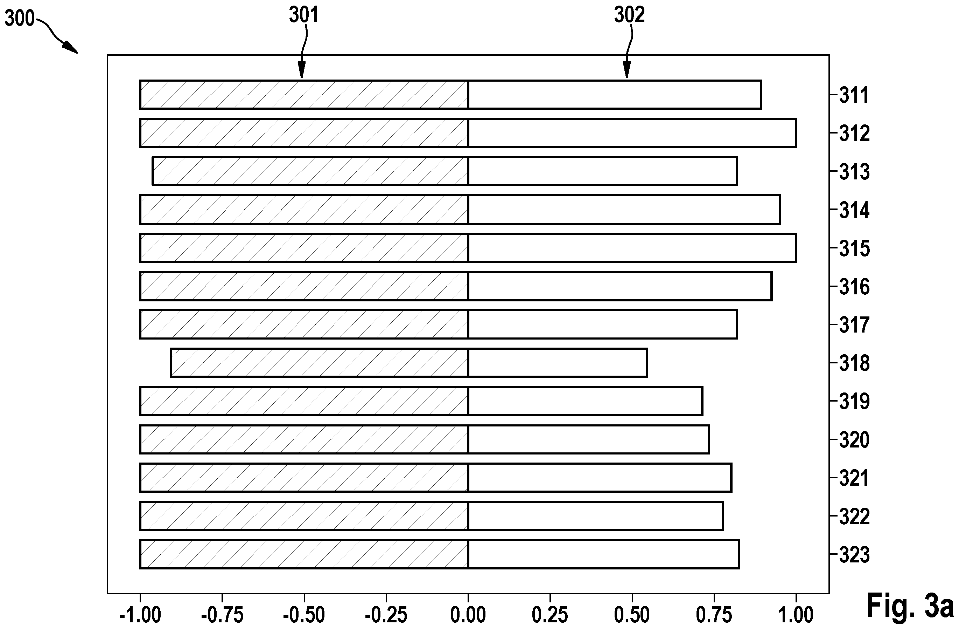

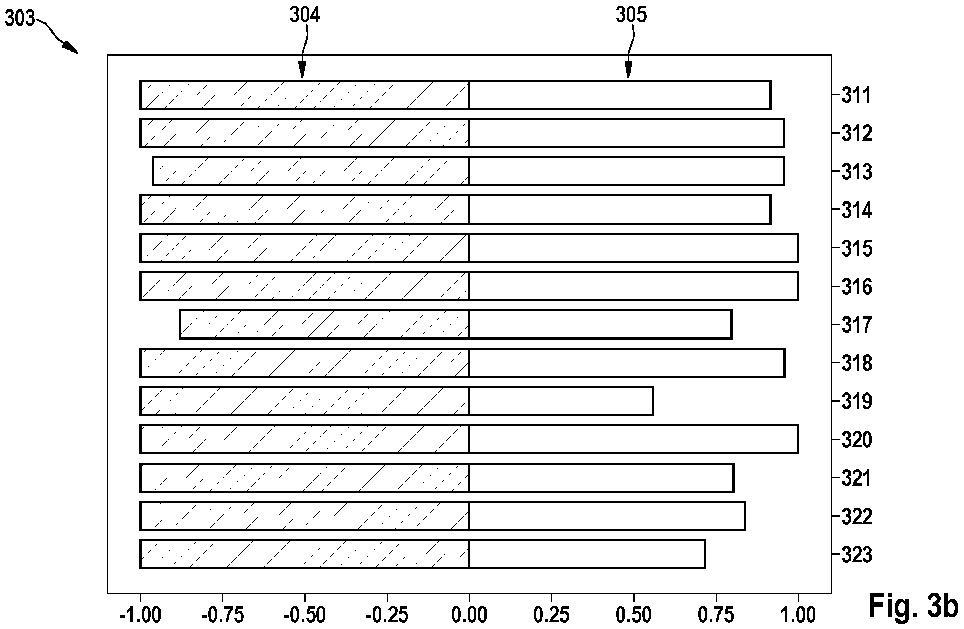

Empirically, it can be shown in Figure 3a and 3b that a pre-trained ResNet-18 [7] on ImageNet [3] exhibits these expected behavior given necessary and sufficient concepts. Specifically, among the 1000 classes in ImageNet, the classes under the "Felidae" hierarchy are considered, these include class ids ranging from 281 to 293. When predicting the coarser class, e.g., when one tries to predict whether the image contains a Felidae or not, rather than recognizing the fine-grained type of Felidae, for simplicity one sets *h*(*x*) = 1 whenever the ResNet outputs any index in {281, ... ,293}.

**Figure 3a** schematically show examples of a measure quantifying the influence of a concept. The

figure shows $\mathbb{E}[c(x)|h(x) = 1]$, where *h*(*x*) predicts the fine-grained Felidae classes, e.g., Persian cat or cheetah. At 302 values are shown where the concept *c* (*x*) is the Felidae concept. At 301 values are shown where the concept *c*(*x*) is the wolf concept. That is, *c*(*x*) is defined by an image classifier for Felidae and wolf respectively. Note that the values 302 are all positive and close to 1, while the values at 301 are all negative and close to -1. This indicates the accuracy of the measure. The target model *h*(*x*) classifies for the following animals:

311    cheetah
312    tiger
313    lion
314    jaguar
315    snow leopard
316    leopard
317    lynx
318    cougar
319    Egyptian Mau
320    Siamese cat

321    Persian cat
322    tiger cat
323    tabby cat

**Figure 3b** schematically show examples of a measure quantifying the influence of a concept. The

figures shows $\mathbb{E}[h(x)|c(x) = 1]$ where *h*(*x*) = 1 means the image is a wolf or Felidae; at 301 the values are shown when *h*(*x*) = 1 predicts a wolf, and at 302 the values are shown when *h*(*x*)=1 predicts a Felidae. The concept model *c*(*x*) classifies the fine-grained Felidae concepts; in particular the labels 311-323 denote the same classes but for *c*(*x*).

For example, in row 311, the concept model classifies cheetah, while the target model classifies wolf (at 301) or Felidae (at 302). Again note that at 302 all values are positive and most are close to 1, while at 301 all values are negative and close to -1.

Further experiments were explored demonstrating the applicability of the newly devised measures. Experiments were conducted on the a-Pascal dataset, see "Describing objects by their attributes.", by A. Farhadi, et al. This dataset contains 6340 training images and 6355 testing images, distributed unevenly over 20 classes. Each image is associated with a concept vector in $\{0,1\}^{64}$, with concepts like "wing" and "shiny". The true concepts are labeled by human experts, later it is shown that current image captioners can achieve reliable performance in labeling concepts as well. Unless specified otherwise, we will use the human-labeled concepts in the experiments.

An advantage of embodiments is their ability to work with any model. This flexibility enables one to apply the measures to both logistic regression (LR) and random forest (RF) models, setting it apart from conventional approaches that apply only to neural networks. In an experiment, these measures were utilized to compare LR and RF models. The LR classifier was trained with a $\ell_2$ regularizer. The RF classifier has 100 trees and each has a maximum depth of 15. Both models achieve 87%

accuracy. The measures $\mathbb{E}[h(x)|c(x) = 1]$ and

$\mathbb{E}[c(x)|h(x) = 1]$, were computed for various target classifications and concept classifications. The measures provided valuable insights into the dissimilarities of the models, despite LR and RF achieving almost identical accuracy. Specifically, when predicting the cat class, RF weights more on the concepts "tail", "torso", and "leg", while LR puts more weight on "eye". When predicting the chair class, RF is more sensitive to the concept "leather" compared to LR, which is not aligned with the true data distribution.

Embodiments also provides a convenient way to study the behavior of different optimizers. The conventional wisdom has been that SGD finds a minimum that generalizes better while ADAM finds a local minimum faster, we are able to demonstrate what concepts in the images are picked up by each optimizer, which can lead to an explanation to the discrepancies in the optimizers' behaviors in addition to generalization ability.

ResNet-18 pre-trained on ImageNet was used, and finetune with the following optimizers (unspecified hyperparameters are set to PyTorch defaults): [(a)] SGD, last linear layer learning rate $1e-3$, other layer learning rate $1e-9$, momentum 0.9, weight decay $5e-4$. AdamW, last linear layer learning rate $1e-3$, other layer learning rate $1e-9$. Both models are trained 100 epochs, the SGD model achieves a test accuracy of 58.46% and the AdamW model achieves 60.26%. The measure $\mathbb{E}[c(x)|h(x)=1]$, was computed for various concepts and target classifications. Even though the models have similar accuracy, various differences between the two models were found. For example, when $h(x)$ predicts the "motorbike" class, it was found that AdamW over-predicts the motorbike class too much by putting too much weight on several irrelevant concepts like "leg", and hence too less weight on relevant concepts like "engine". This is in contrast to both SGD and the ground truth. Accordingly, training using AdamW may be improved by increasing the weight of some training examples, or adding specific training examples, to decrease the importance of legs for recognizing motorcycles.

The recent development of vision-language models like CLIP enables zero-shot classification performance via prompt engineering. See, A. Radford, et al. "Learning transferable visual models from natural language supervision." These models have an image encoder $f(x)\colon \mathbb{R}^d \to \mathbb{R}^h$ and a text encoder $g(t)\colon \mathbb{R}^p \to \mathbb{R}^h$. These encoders are trained contrastively to align the matching $f(x)$ and $g(t)$, where the text $t$ is the true caption of the image $x$. During inference time, given a set of $\mathcal{Z}$ classes, for each $z \in \mathcal{Z}$ we can construct a class prompt "a photo of $\{t_z\}$", and for an input image x, we predict: $\hat{z} = arg\,max_{z \in Z} f(x) \cdot g(t_z)$. We use the CLIP model with ViT-B16 vision backbone on the a-Pascal dataset in this experiment, achieving a zero-shot test accuracy of 78.2% and an F1 -score of 0.6796. Various measures may be computed to investigate the predictions of the model. For example, the measure E[c(x)|h(x) = 1] where h(x) = 1 predicts class "bottle" may be computed. We identify 10 class prompts that mistakenly weigh too much on 13 irrelevant concepts. For example, when conditioning on the original CLIP prompts to predict "bottle", there are too many predicted images containing irrelevant concepts like "head", "ear", and "torso".

To counter the false emphasis, the original class prompts of these 10 classes may be edited by subtracting the irrelevant concepts. In particular, considering an irrelevant concept w for class z, one may use $g(t_z) - \lambda \cdot g(w)$ as the new prompt embedding for classifying class z,

where $\lambda < 1$ is a scalar that prevents us from over-subtracting. Heuristically we pick $\lambda = 0.1$ based on trial-and-error using the training data, however, one can certainly learn $\lambda$ in a few-shot fashion. See more details in the appendix. The edited prompts improve the F1 -score to 0.7042. Moreover, the edited prompts show better alignment.

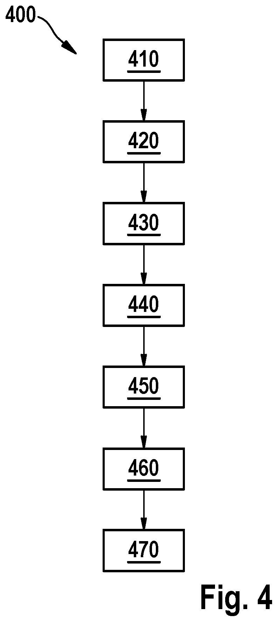

Figure 4 schematically shows an example of an embodiment of a method 400 for computing a measure quantifying the influence of a concept. Method 400 is computer-implemented method (400) and may be used for generating concept-based explanations for a target model by computing a measure quantifying the influence of a concept defined by a concept model on classifications of a target model. Method 400 comprises

- providing (410) the target model ($h$), the target model being configured to receive as input at least sensor data ($x$) and to produce as output a target classification ($h(x)$),
- providing (420) the concept model ($c$), the concept model being configured to receive as input at least sensor data ($x$) and to produce as output a concept classification ($c(x)$),
- providing (430) an evaluation set ($X$) of multiple sensor data,
- selecting (440) a similarity function ($s$) from a plurality of similarity functions, wherein each similarity function of the plurality is configured to receive as input an output of the target model for sensor data and an output of the concept model for said sensor data,
- calculating (450) the measure, the calculating comprising

  - for each sensor data in the evaluation set computing (460) an output of the target model for the sensor data, an output of the concept model for said sensor data, and an output of the selected similarity function ($s(h(x), c(x))$) applied to the output of the target model and the output of the concept model,
  - summing (470) the outputs of the similarity function, and deriving the measure from the summing.

The target model and/or concept model may be defined by multiple parameters, e.g., at least 10, 100, 10000, or 100000, etc. The target model and/or concept model may comprise a neural network. For example, the neural network may have at least 2, 5, 10, 15, 20 or 40 hidden layers, or more, etc. The number of neurons in the neural network may, e.g., be at least 10, 100, 1000, 10000, 100000, 1000000, or more, etc.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 400. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

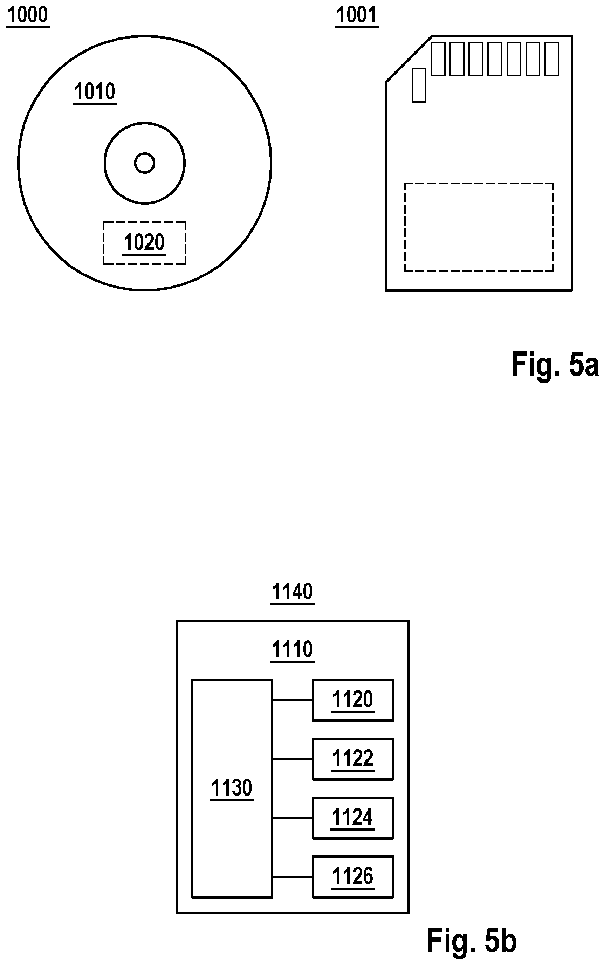

Figure 5a shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method for generating concept-based explanations.

Figure 7b shows in a schematic representation of a processor system 1140 according to an embodiment of a system or device for generating concept-based explanations. The processor system comprises one or more integrated circuits 1110. The architecture of the one or more integrated circuits 1110 is schematically shown in Figure 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., an explanation generating device may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

Further, the memory 1122 may both be considered to be "non-transitory machine-readable media." As used herein, the term "non-transitory" will be understood to exclude transitory signals but to include all forms of storage, including both volatile and non-volatile memories.

While system 1140 is shown as including one of each described component, the various components may be duplicated in various embodiments. For example, the processor may include multiple microprocessors that are configured to independently execute the methods described herein or are configured to perform steps or subroutines of the methods described herein such that the multiple processors cooperate to achieve the functionality described herein. Further, where the system 1140 is implemented in a cloud computing system, the various hardware components may belong to separate physical systems. For example, the processor may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A computer-implemented method (400) for generating concept-based explanations for a target model, comprising computing a measure quantifying the influence of a concept defined by a concept model on classifications of a target model, the method comprising

   - providing (410) the target model ($h$), the target model being configured to receive as input at least sensor data ($x$) and to produce as output a target classification ($h(x)$),
   - providing (420) the concept model ($c$), the concept model being configured to receive as input at least sensor data ($x$) and to produce as output a concept classification ($c(x)$),
   - providing (430) an evaluation set ($X$) of multiple sensor data,
   - selecting (440) a similarity function (s) from a plurality of similarity functions, wherein each similarity function of the plurality is configured to receive as input an output of the target model for sensor data and an output of the concept model for said sensor data,
   - calculating (450) the measure, the calculating comprising
   - for each sensor data in the evaluation set computing (460) an output of the target model for the sensor data, an output of the concept model for said sensor data, and an output of the selected similarity function ($s(h(x), c(x))$) applied to the output of the target model and the output of the concept model,
   - summing (470) the outputs of the similarity function, and deriving the measure from the summing.

2. The method according to Claim 1 wherein the target model is opaque and/or black box.

3. The method according to any of the preceding claims, comprising

   - providing a probability function for the evaluation set, wherein the summing is a weighted summing, weighted with the probability function.

4. The method according to any of the preceding claims, wherein the target model output comprises a value ($x_t$) indicating the target classification, the concept model output comprises a value ($x_c$) indicating the concept classification, and wherein

   - the similarity function comprises a multiplication ($x_t x_c$) of the target model value ($x_t$) and the concept model value ($x_c$), and/or
   - the similarity function is zero if the target model value is below a threshold, and the similarity function is monotonic with the concept model value, and/or
   - the similarity function is zero if the concept model value is below a threshold, and the similarity function is monotonic with the target model value.

5. The method according to any of the preceding claims, wherein the sensor data received by the target model and concept model are dimensional, said dimensionality being:

   - one-dimensional (1D), e.g., wherein the sensor data comprises one or more of an audio segment, and time series data; or
   - two-dimensional (2D), e.g., wherein the sensor data comprises one or more of 2D spatial data, an image; or
   - three-dimensional (3D), e.g., wherein the sensor data comprises one or more of 3D spatial data, and a volumetric image;
   - higher-dimensional than three-dimensional, e.g., wherein the sensor data comprises one or more of spatiotemporal data, a volumetric movie segment.

6. The method according to any of the preceding claims, comprising

   - training the target model on training data, the training data comprising a training set of multiple sensor data and corresponding classifications, wherein the evaluation set is a subset of the training set and/or wherein the training set is equal to the evaluation set, and/or
   - training the concept model on concept training data, the concept training data comprising a concept training set of multiple sensor data and corresponding concept classifications.

7. The method according to any of the preceding claims, comprising training the target model on training data, the training data comprising a training set of multiple sensor data and corresponding classifications, wherein the evaluation set is a subset of the training set, and wherein the evaluation set is selected based on one of the following criteria:

   - a random selection from the training set,
   - a controlled selection to obtain a distribution of target classifications produced by the target model on the evaluation set consistent with the distribution of target classifications when applied to the training set,
   - a stratified sampling method wherein the training set is partitioned into strata according to at least the target classification by the target model and the evaluation set is chosen to represent all strata in the training set.

8. A training method for training a target model,

   - providing at least two different training methods for the target model,
   - training a first and second target model according to the at least two different training methods on training data, the training data comprising a training set of multiple sensor data and corresponding classifications, the target model and the first and second target model being configured to receive as input at least sensor data and to produce as output a target classification ($h(x)$),
   - determining a first measure for the first target model, and a second measure for the second target model, according to the method of any of the preceding claims,
   - selecting a training method from the at least two different training methods in dependence on the first and second measure,
   - training the target model using the selected training method.

9. The method according to any of the preceding claims, comprising

   - determining a defect in the target model by comparing the measure to a threshold value.

10. The method according to any of the preceding claims, comprising

   - providing multiple concept models, and computing multiple measures for the target model corresponding to the multiple concept models, wherein the method further comprises one or more of:
   - selecting one or more concept models from the multiple concept models in dependence on the multiple measures, and reporting the selected concept model, and
   - adjusting the target model to enhance an alignment between the computed multiple measures and desired multiple measures,
   - adjusting the training data to enhance the alignment between the computed multiple measures and desired multiple measures, and retraining or refining the target model,
   - identifying bias in the target model from the multiple measures.

11. The method according to any of the preceding claims, wherein the target model comprises an image classifier for an autonomous vehicle, the image classifier being configured to classify objects in a traffic scene and/or to classify traffic conditions as safe for autonomous driving, the method comprising

   - evaluating the target model for safety by comparing the measure for the target model to a threshold value.

12. The method according to any of the preceding claims, wherein the selecting of the similarity function comprises

   - presenting a representation of the plurality of similarity functions on a display and receiving a selection from a user, and/or
   - executing a script in which the similarity function is selected, and/or
   - receiving a selection for the similarity function at a computer interface.

13. The method according to any of the preceding claims, wherein

   - the plurality of similarity functions are monotonic in the output of the target model and monotonic in the output of the concept model.

14. A system comprising: one or more processors; and one or more storage devices storing instructions that, when executed by the one or more processors, cause the one or more processors to perform operations for any of the preceding claims.

15. A transitory or non-transitory computer storage medium encoded with instructions that, when executed by one or more computers, cause the one or more computers to perform a method according to any of claims 1-13.

**Amended claims in accordance with Rule 137(2) EPC.**

1. A computer-implemented method (400) for generating concept-based explanations for a target model, comprising computing a measure quantifying the influence of a concept defined by a concept model on classifications of a target model, the method comprising

    - providing (410) the target model ($h$), the target model being configured to receive as input at least sensor data ($x$) and to produce as output a target classification ($h(x)$), wherein the target model output comprises a value ($x_t$) indicating the target classification,
    - providing (420) the concept model (c), the concept model being configured to receive as input at least sensor data ($x$) and to produce as output a concept classification ($c(x)$), wherein the concept model output comprises a value ($x_c$) indicating the concept classification,
    - providing (430) an evaluation set ($X$) of multiple sensor data,
    - providing a computer interface for selecting (440) a similarity function (s) from a plurality of similarity functions, wherein each similarity function of the plurality is configured to receive as input an output of the target model for sensor data and an output of the concept model for said sensor data,
    and wherein
    - a similarity function of the plurality is zero if the target model value is below a threshold, and the similarity function is monotonic with the concept model value, and
    - a similarity function of the plurality is zero if the concept model value is below a threshold, and the similarity function is monotonic with the target model value
    - calculating (450) the measure, the calculating comprising
    - for each sensor data in the evaluation set computing (460) an output of the target model for the sensor data, an output of the concept model for said sensor data, and an output of the selected similarity function ($s(h(x),c(x))$) applied to the output of the target model and the output of the concept model,
    - summing (470) the outputs of the similarity function, and deriving the measure from the summing.

2. The method according to Claim 1 wherein the target model is opaque and/or black box.

3. The method according to any of the preceding claims, comprising

    - providing a probability function for the evaluation set, wherein the summing is a weighted summing, weighted with the probability function.

4. The method according to any of the preceding claims, wherein the sensor data received by the target model and concept model are dimensional, said dimensionality being:

    - one-dimensional (1 D), e.g., wherein the sensor data comprises one or more of an audio segment, and time series data; or
    - two-dimensional (2D), e.g., wherein the sensor data comprises one or more of 2D spatial data, an image; or
    - three-dimensional (3D), e.g., wherein the sensor data comprises one or more of 3D spatial data, and a volumetric image;
    - higher-dimensional than three-dimensional, e.g., wherein the sensor data comprises one or more of spatiotemporal data, a volumetric movie segment.

5. The method according to any of the preceding claims, comprising

    - training the target model on training data, the training data comprising a training set of multiple sensor data and corresponding classifications, wherein the evaluation set is a subset of the training set and/or wherein the training set is equal to the evaluation set, and/or
    - training the concept model on concept training data, the concept training data comprising a concept training set of multiple sensor data and corresponding concept classifications.

6. The method according to any of the preceding claims, comprising training the target model on training data, the training data comprising a training set of multiple sensor data and corresponding classifications, wherein the evaluation set is a subset of the training set, and wherein the evaluation set is selected based on one of the following criteria:

- a random selection from the training set,
- a controlled selection to obtain a distribution of target classifications produced by the target model on the evaluation set consistent with the distribution of target classifications when applied to the training set,
- a stratified sampling method wherein the training set is partitioned into strata according to at least the target classification by the target model and the evaluation set is chosen to represent all strata in the training set.

7. A training method for training a target model,

- providing at least two different training methods for the target model,
- training a first and second target model according to the at least two different training methods on training data, the training data comprising a training set of multiple sensor data and corresponding classifications, the target model and the first and second target model being configured to receive as input at least sensor data and to produce as output a target classification ($h(x)$),
- determining a first measure for the first target model, and a second measure for the second target model, according to the method of any of the preceding claims,
- selecting a training method from the at least two different training methods in dependence on the first and second measure,
- training the target model using the selected training method.

8. The method according to any of the preceding claims, comprising

- determining a defect in the target model by comparing the measure to a predicted threshold value.

9. The method according to any of the preceding claims, comprising

- providing multiple concept models, and computing multiple measures for the target model corresponding to the multiple concept models, wherein the method further comprises one or more of:
- selecting one or more concept models from the multiple concept models in dependence on the multiple measures, and reporting the selected concept model, and
- adjusting the target model to enhance an alignment between the computed multiple measures and desired multiple measures,
- adjusting the training data to enhance the alignment between the computed multiple measures and desired multiple measures, and retraining or refining the target model.

10. The method according to any of the preceding claims, wherein the target model comprises an image classifier for an autonomous vehicle, the image classifier being configured to classify objects in a traffic scene and/or to classify traffic conditions as safe for autonomous driving, the method comprising

- evaluating the target model for safety by comparing the measure for the target model to a threshold value.

11. The method according to any of the preceding claims, wherein the selecting of the similarity function comprises

- presenting a representation of the plurality of similarity functions on a display and receiving a selection from a user, and/or
- executing a script in which the similarity function is selected, wherein the script specifies the selected similarity function, the script automating the selection process based on predefined criteria or configurations, and/or
- receiving a selection for the similarity function at a computer interface.

12. The method according to any of the preceding claims, wherein

- the plurality of similarity functions are monotonic in the output of the target model and monotonic in the output of the concept model.

13. A system comprising: one or more processors; and one or more storage devices storing instructions that, when executed by the one or more processors, cause the one or more processors to perform operations for any of the preceding claims.

14. A transitory or non-transitory computer storage medium encoded with instructions that, when executed by one or more computers, cause the one or more computers to perform a method according to any of claims 1-12.

100

110

111

112

113

**Fig. 1**

240

210

211

220 → 221

230 → 231

241

251

**Fig. 2a**

251

252 → 260 → 271

⋮

253

**Fig. 2b**

Fig. 3a

EP 4 524 824 A1

Fig. 3b

400

410

420

430

440

450

460

470

**Fig. 4**

1000

1010

1020

1001

**Fig. 5a**

1140

1110

1130

1120

1122

1124

1126

**Fig. 5b**

Europäisches
Patentamt

European
Patent Office

Office européen
des brevets

# EUROPEAN SEARCH REPORT

**Application Number**

EP 23 19 7867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Bai Andrew ET AL: "Concept Gradient: Concept-based Interpretation Without Linear Assumption", arXiv (Cornell University), 31 August 2022 (2022-08-31), XP093134455, Ithaca DOI: 10.48550/arxiv.2208.14966 Retrieved from the Internet: URL:https://arxiv.org/pdf/2208.14966v1.pdf [retrieved on 2024-02-23] * abstract * * page 2 - page 9 * * page 13 - page 20 * | 1-15 | INV. G06N5/045 G06N20/00 |
| A | AVINASH KORI ET AL: "GLANCE: Global to Local Architecture-Neutral Concept-based Explanations", ARXIV.ORG, CORNELL UNIVERSITY LIBRARY, 201 OLIN LIBRARY CORNELL UNIVERSITY ITHACA, NY 14853, 5 July 2022 (2022-07-05), XP091263559, * the whole document * | 1-15 | |

TECHNICAL FIELDS SEARCHED (IPC)

G06N

The present search report has been drawn up for all claims

| Place of search | Date of completion of the search | Examiner |
|---|---|---|
| The Hague | 23 February 2024 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)